# FASCICULE DE BREVET EUROPEEN

(11) **EP 2 447 023 B1**
(45) Date de publication et mention de la délivrance du brevet: **15.04.2015**
(21) Numéro de dépôt: 11186762.8
(22) Date de dépôt: 26.10.2011
(51) Int. Cl.: A01N 25/00, C09K 21/12, B27K 3/52

(54) **Composition pour le traitement du bois**
Zusammensetzung für die Holzbehandlung
Composition for treating wood

(30) Priorité: 26.10.2010 FR 1058796
(43) Date de publication de la demande: 02.05.2012
(73) Titulaire: Société Berkem, 24680 Gardonne (FR)
(72) Inventeur: Fahy, Olivier, 24100 LEMBRAS (FR); Messaoudi, Daouïa, 69008 LYON (FR)
(74) Mandataire: Coquel, Jean-Marc

(56) Documents cités:
- WO-A1-2006/087269
- DE-A1-102007 005 527
- FR-A- 1 162 292
- US-A1- 2006 183 821

## Description

La présente invention concerne une composition pour le traitement du bois comprenant un agent ignifugeant. Elle concerne également l'utilisation de cette composition pour le traitement du bois ou de matériaux dérivés du bois.

Le bois ou les matériaux dérivés du bois sont sujets à différentes altérations de surfaces susceptibles de se propager à l'ensemble du substrat. Ces dégradations sont de natures biologiques, physiques ou chimiques.

Ainsi les altérations liées aux insectes xylophages, aux termites ou aux champignons lignivores exigent un traitement insecticide ou fongicide parfois couplé à une hydrofugation.

De même, les remontées de tanins propres aux bois feuillus peuvent êtres maîtrisées grâce à l'application de préparations adaptées.

Ces différentes propriétés conférées au matériau peuvent êtres combinées à des traitements ignifuges ou retardateurs de feu.

En effet, divers règlements sont actuellement en vigueur dans les pays européens pour garantir la sécurité-incendie des bâtiments.

Ces règlements nationaux relatifs à l'incendie, basés sur les traditions nationales et les estimations du niveau de sécurité, constituent, dans plusieurs pays, le principal obstacle à l'utilisation du bois dans les bâtiments de part son inflammabilité et ses caractéristiques de propagation du feu.

Une nouvelle classification européenne pour la réaction au feu a été définie pour tenter d'harmoniser au niveau européen l'ensemble de cette réglementation.

Or, il est relativement facile d'obtenir un comportement au feu amélioré pour les produits du bois.

En effet, la plupart des produits ignifuges réduisent efficacement les différents paramètres de réaction au feu du bois, tels que l'inflammabilité, le débit calorifique et la propagation des flammes. Les meilleures classifications nationales et européennes pour les produits combustibles tels que pour le bois, peuvent être obtenues.

Cependant, il faut avoir recours à des taux de rétention élevés par rapport aux traitements de préservation du bois classiques utilisés pour protéger le bois contre la biodégradation.

Les produits ignifuges qui sont aujourd'hui utilisés en complément des produits de préservation classiques, sont:
a) de type sels minéraux (à base de bore, par exemple) pour les intérieurs secs uniquement,
b) de type produits chimiques (à base de phosphore, par exemple) résistant à l'humidité à l'intérieur et à l'extérieur dans les cas où une protection contre les intempéries est nécessaire,
c) de types polymères résistant à la lixiviation à l'extérieur dans des conditions normales d'intempéries (vernis ou peintures intumescents, par exemple).

Or, on constate que pour traiter un bois à la fois ignifuge et contre les champignons, insectes et termites, il faut appliquer sur ce bois deux produits distincts.

L'ignifugation du bois connue de l'état de l'art se divise en effet en trois grands procédés.

Selon un premier procédé, l'agent ignifugeant est incorporé dans les produits dérivés du bois pendant la fabrication (type panneaux OSB (Oriented Strand Board - panneau de lamelles minces, longues et orientées), panneaux de particules).

Toutefois, on ne connaît aucun produit dérivé de bois utilisant ce procédé d'ignifugation qui soit également traité insecticide et/ou fongicide.

Selon un deuxième procédé, le produit est imprégné sous pression dans une pièce en bois massif, en contreplaqué, en panneau de particules ou de fibres après fabrication. Ce procédé nécessite une première étape d'ignifugation comportant un à deux cycles de traitement de quatre heures chacun, soit environ une journée de travail. Il nécessite ensuite une seconde étape distincte de traitement fongicide/insecticide du bois prenant la forme d'un cycle de traitement de quatre heures, soit au total deux jours de travail au maximum

Selon un troisième procédé, le produit est appliqué in situ à la façon d'une peinture après installation des produits dérivés du bois. Le bois est par conséquent, préalablement traité fongicide/insecticide, puis il reçoit l'application de l'ignifuge.

Il ressort clairement de ces trois procédés connus de l'état de l'art que deux étapes distinctes sont requises pour ignifuger et traiter fongicide/insecticide une pièce de bois ou constituée de matériaux dérivés du bois.

Ces deux étapes distinctes résultent de l'incompatibilité chimique totale qui existe entre l'agent ignifugeant, d'une part, et les insecticide et fongicide d'autre part.

Or, ces deux étapes de traitement non seulement immobilisent des installations mais sont longues et fastidieuses à réaliser pour les opérateurs. Ces étapes de traitement sont, par conséquent, coûteuses et vont à l'encontre des intérêts économiques des sociétés exploitantes.

Par ailleurs, l'efficacité des formulations aqueuses traitantes du bois dépend naturellement de leurs caractéristiques et performances intrinsèques mais également du respect des quantités mises en oeuvre.

Au-delà de ces paramètres, l'homogénéité de l'application et le recouvrement intégral de la surface du support à protéger sont des critères fondamentaux de réussite.

Il est fréquent que lors d'une application par pulvérisation d'un traitement curatif de charpente, certaines parties de l'ouvrage échappent au traitement du fait des angles de projection.

De même lors de la réalisation des éléments de charpentes industrielles, il est fréquent que les pièces de bois préalablement traitées subissent des coupes d'ajustement dont il est impératif que les surfaces soient également traitées.

Bien évidement, un traitement insecticide en container de transport, un traitement hydrofuge ou ignifuge ne sont réellement efficaces que si l'ensemble de la surface extérieure des pièces a bénéficié de l'application.

Dans ces domaines, tout manque ne peut que conduire qu'à l'échec du traitement, l'objectif recherché n'étant alors pas atteint.

Aujourd'hui, le contrôle du traitement de ces surfaces ne se réalise, au mieux, qu'avec difficulté. En effet, les formulations appliquées sont incolores pour d'évidentes raisons d'esthétique ou par nécessité technique.

De plus, les produits utilisés sont la plupart du temps formulés en phases aqueuse. Ce vecteur s'évapore rapidement et ne laisse pas de trace ni de coloration particulière sur les surfaces traitées, ce qui en rend le contrôle visuel impossible au terme de cette évaporation.

Le document US 2006/183821 A1 décrit une composition pour le traitement du bois comprenant un ignifugeant, un insecticide et un fongicide.

L'objectif de la présente invention est donc de proposer une composition pour le traitement du bois, qui soit simple dans sa conception et son mode opératoire, économique et permettant de traiter en une seule étape ce bois à la fois en ignifugation et en fongicide et/ou insecticide.

Un autre objet de la présente invention est une composition pour le traitement du bois qui autorise un contrôle non destructif et rapide de la qualité et de l'uniformité de son application sur une pièce de bois à protéger.

A cet effet, l'invention concerne une composition pour le traitement du bois ou de matériaux dérivés du bois, cette composition comportant au moins un insecticide et/ou au moins un fongicide selon la revendication 1.

De manière avantageuse, l'agent ignifugeant est intégré dans la composition pour le traitement du bois sans modifier, ni altérer négativement les propriétés de l'insecticide et/ou du fongicide.

L'introduction de cet agent ignifugeant directement dans la composition pour le traitement du bois permet également de satisfaire les avantages recherchés quant au coût et à la facilité de mise en oeuvre de la composition. Cette introduction permet ainsi de réaliser un gain substantiel de temps lors du traitement de bois de structure et de parement de constructions industrielles ou d'habitation, de bois de menuiserie, de bardages en usage préventif.

Il est du mérite de la demanderesse d'être parvenue à déposer en une seule étape de traitement à l'aide de la présente composition, sur du bois ou des matériaux dérivés du bois, au moins un agent ignifugeant, un insecticide et/ou un fongicide.

En effet, l'une des difficultés de cette démarche était de vaincre le préjugé bien établi dans son domaine technique que l'intégration d'un agent ignifugeant à une composition de traitement du bois comprenant un insecticide et/ou un fongicide conduirait inévitablement à la déstabilisation de la stabilité chimique de cette composition, et par conséquent à rendre cette dernière inefficace.

Avantageusement, la présente composition est un traitement curatif insecticide ou insecticide et fongicide des bois à protéger, en même temps qu'un traitement ignifuge conférant des performances d'ininflammabilité de niveau M1 ou B, C (selon les euroclasses) au bois à protéger.

De préférence, cette composition est une composition aqueuse.

Bien entendu, l'agent ignifugeant peut être constitué d'une seule espèce moléculaire azote/phosphore ou au contraire, d'un mélange de plusieurs espèces azote/phosphore différentes.

Cet agent ignifugeant est, de préférence, thermostable.

A titre d'exemple, l'agent insecticide est choisi dans la famille des pyréthrinoïdes, des néonicotinoïdes ou encore d'autres familles d'insecticides telles que les carbamates... A titre purement illustratif, on pourra choisir cet insecticide dans le groupe comprenant la Bifenthrine, l'alpha-cyperméthrine, la cyperméthrine, la perméthrine, l'etofenprox, l'imidacloprid, le thiacloprid.

De préférence, le fongicide est un fongicide organique ou encore mieux une combinaison de différents fongicides organiques.

Dans différents modes de réalisation particuliers de cette composition pour le traitement du bois, chacun ayant ses avantages particuliers et susceptibles de nombreuses combinaisons techniques possibles:
- ledit au moins un agent ignifugeant est un composé à base d'azote et de phosphate ou de polyphosphate ou de phosphinate ou encore de leurs sels,

Alternativement, ledit au moins un agent ignifugeant est un mélange de composés nitrogénés et mélaminés ou dérivés de la mélamine.

La composition comprend de 5 à 60 % en poids d'agent ignifugeant, par rapport au poids total de la composition.
- Cette composition est une émulsion aqueuse, une microémulsion, une dispersion aqueuse ou encore une solution aqueuse, Cette composition peut être liquide ou sous forme d'un gel.
- ladite composition comprend de plus au moins un des éléments suivants : un agent fluorescent, un agent susceptible de filtrer les UV, un hydrofuge, un colorant, un agent de conservation et des combinaisons de ceux-ci,

Cette composition comprenant au moins un agent fluorescent, elle permet avantageusement de révéler la présence et l'homogénéité d'application de produits de traitement des surfaces en bois ou matériaux dérivés du bois. Bien entendu, lorsque cette composition comporte au moins un agent fluorescent, l'agent susceptible de filtrer les UV ne filtre pas le spectre dans lequel ledit au moins un agent fluorescent absorbe

De préférence, ledit au moins un agent fluorescent absorbe dans le spectre compris entre 300 nm et 500 nm, et encore mieux dans l'UVA entre 350 nm et 415 nm, en réémettant entre 400 et 525 nm.

Dans un mode de réalisation particulier, le pourcentage dudit agent fluorescent dans ladite composition est inférieur à 5 pourcents en poids, et encore mieux compris entre 0,01 et 1 pourcent en poids par rapport au poids total de ladite composition.

Par ailleurs, l'hydrofuge pourra être choisi parmi les composés à base de silanes ou les composés siliconés ou fluorés par exemple.

Avantageusement, l'agent de conservation peut comporter au moins un antioxydant.
- ledit au moins un agent fluorescent est un azurant optique,

A titre purement illustratif, ladite composition peut comprendre un composé de la famille des azurants optiques et au moins un deuxième agent fluorescent qui n'appartient pas à cette famille.
- ledit au moins un azurant optique est choisi parmi les dérivés du stilbène, les dérivés coumariniques, les dérivés oxazole et benzoxazole, les dérivés de naphthalimide, les dérivés de pyrène et les dérivés de pyrazoline,

De préférence, ledit au moins un azurant optique est choisi parmi les dérivés du stilbène, les dérivés benzoxazole et les dérivés de naphthalimide de manière à ne pas modifier l'état physique de la composition lors de son ajout.

La présente invention concerne également un procédé de traitement d'au moins une pièce en bois ou constituée de matériaux dérivés du bois, dans lequel on expose ladite au moins une pièce à la composition telle que décrite précédemment, pour déposer simultanément au moins un agent ignifugeant, un insecticide et/ou un fongicide sur ladite pièce.

Ce procédé de traitement peut comporter une étape d'injection combinée à une pulvérisation de cette composition dans le bois. Alternativement, ce procédé de traitement comporte une étape de trempage du bois à protéger dans ladite composition de l'invention.

Ainsi, en une seule opération, on traite la pièce en bois ou constituée de matériaux dérivés du bois de manière curative et préventive mais on rend également celle-ci retardateur de feu.

L'agent ignifugeant est choisi parmi les composés azotés et phosphorés.

La présente invention concerne encore l'utilisation d'une composition pour le traitement du bois telle que décrite précédemment pour le traitement du bois.

De préférence, on utilise cette composition pour le traitement d'au moins la charpente d'un bâtiment.

Cette composition peut également être mise en oeuvre pour traiter des bois de structure et de parement de constructions industrielles ou d'habitation.

Selon un mode de réalisation de la présente invention, une pièce en bois massif est traitée avec une composition aqueuse pour le traitement du bois comprenant un agent ignifuge et plusieurs insecticides et fongicides.

L'agent ignifuge est un composé azoté et organo-phosphoré. Le pourcentage de cet agent ignifuge dans la composition est de l'ordre de 50 pourcents en poids par rapport au poids total de la composition, cette dernière se présentant sous la forme liquide.

La présence de cet agent ignifuge dans la composition de traitement du bois ne provoque avantageusement aucune instabilité des matières actives fongicides et insecticides.

Ces dernières sont ici la Bifenthrine et la perméthrine pour les insecticides et différents fongicides organiques. Le pourcentage de ces insecticides varie entre 0, 1 % et 1% en poids par rapport au poids total de la composition. Le pourcentage total des différents fongicides varie entre 0,01 % et 1% en poids par rapport au poids total de la composition.

La composition aqueuse de traitement est déposée sur la pièce de bois par un procédé d'injection suivie d'une double pulvérisation qui permet de mieux diffuser et saturer les cellules du bois avec l'agent ignifuge.

**TABLEAU I**

| | | | | |
|---|---|---|---|---|
| densité bois Grammage composition appliquée sur bois Grammage agent ignifuge Epaisseur de la planche de bois | 400 kg/m³ | | 400 kg/m³ | |
| | | | | |
| | 550 g/m² | | 350 g/m² | |
| | 275 g/m² | | 175 g/m² | |
| | | | | |
| | 110 mm | | 110 mm | |

| | Echantillon 1 | Echantillon 2 | Echantillon 1 | Echantillon 2 |
|---|---|---|---|---|
| CLASSEMENT | C,s₂,d₀ | C,s₂,d₀ | C,s₂,d₀ | C,s₂,d₀ |

**TABLEAU II**

| | | | | |
|---|---|---|---|---|
| densité bois Grammage composition appliquée sur bois Grammage agent ignifuge Epaisseur de la planche de bois | 900 kg/m³ | | 900 kg/m³ | |
| | | | | |
| | 150 g/m² | | 75 g/m² | |
| | 75 g/m² | | 37,5 g/m² | |
| | | | | |
| | 100 mm | | 100 mm | |

| | Echantillon 1 | Echantillon 2 | Echantillon 1 | Echantillon 2 |
|---|---|---|---|---|
| CLASSEMENT | B,s₁,d₀ | B,s₁,d₀ | B,s₁,d₀ | B,s₁,d₀ |

Des tests de réactions au feu (test SBI EN 13823) sur des pièces en bois massif : bois résineux-blancs (400kg/m³) et durs (900kg/m³) ont été menés pour démontrer les résultats apportés par la présente invention (Tableaux I et II).

On constate que le procédé le procédé de mise en oeuvre qu'est le système injection, suivie d'une ou plusieurs pulvérisations permet de diffuser et de mieux saturer les cellules du bois avec l'ignifugeant.

Dans ce mode de mise en oeuvre, on observe un phénomène de saturation des cellules du bois qui nous amène au meilleur classement possible du bois.

Selon un autre mode de mise en oeuvre, la composition aqueuse de traitement est déposée sur la pièce de bois par trempage (Tableau III). La pièce qui est en bois massif (900kg/m³).

**TABLEAU III**

| | | | | |
|---|---|---|---|---|
| densité bois Grammage composition appliquée sur bois (durée de trempage) Grammage agent ignifuge Epaisseur de la planche de bois | 900 kg/m³ | | 900 kg/m³ | |
| | | | | |
| | 300 g/m² (1 heure) | | 700 g/m² (2 heures) | |
| | | | | |
| | 150 g/m² | | 350 g/m² | |
| | | | | |
| | 18 mm | | 18 mm | |

| | Echantillon 1 | Echantillon 2 | Echantillon 1 | Echantillon 2 |
|---|---|---|---|---|
| CLASSEMENT | C,s₂,d₀ | C,s₂,d₀ | B,s₂,d₀ | B,s₂,d₀ |

On constate que plus on augmente le grammage de produit sur le bois, en augmentant la durée de trempage, dans ce cas, plus la protection contre la réaction au feu est renforcée : passage du classement C au classement B.

Selon un autre mode de réalisation de la présente invention, une composition aqueuse pour le traitement de surfaces du bois ou de matériaux dérivés du bois comprend un agent ignifugeant tel qu'un éthylènediamine-phosphate (EDAP - éthylènediamine phosphate) modifié ou non, des matières actives fongicides et insecticides ainsi un azurant optique.

L'azurant optique est dispersé dans cette composition à base d'eau à des doses variant de 0,01 % (m/m) à 5,00 % (m/m). Cet azurant optique est notamment choisi dans la famille des stilbènes.

Le DSBP, le DAS1 et le DAS2 ou 4,4'-bis[(4-(4-sulfoanilino)-6-bis(2-hydroxyethyl)amino-1,3,5-triazin-2-yl)amino]stilbene-2,2'-disulfonate] distyrylbiphenyl (DSBP) et les dérivés de diaminostilbene (DAS) ajoutés en quantités variant de 0,01 % à 0,5 % dans les compositions à tracer conviennent particulièrement bien à l'usage décrit par l'invention.

A la lumière du jour, l'adjuvant incorporé ne modifie pas la coloration du produit de traitement, ni celle de la surface traitée. Cet azurant optique agit comme traceur et rend la surface traitée fluorescente lorsqu'elle est exposée au rayonnement d'une lampe UV de longueur d'onde déterminée.

Cet azurant optique autorise ainsi un contrôle visuel de l'homogénéité de l'application ainsi que par l'intensité de la fluorescence, une estimation de la quantité de formulation déposée.

Le principe de fonctionnement des agents azurants est connu de l'homme de l'art. Les molécules utilisées dans cet usage ont pour propriété d'absorber le rayonnement ultra violet émis entre 300 et 400 nanomètres. Excitée par une lampe émettant dans cette plage de longueur d'ondes, la molécule réémet cette énergie par fluorescence dans la partie visible du spectre comprise entre 400 et 500 nanomètres. La fluorescence réémise est directement liée pour une molécule connue au produit de l'énergie initialement émise par la teneur en azurant optique fixée au support.

Toutefois, les agents azurants étant photosensibles, ils se dégradent à la lumière en sous produits inertes sur le plan de la fluorescence. En choisissant judicieusement l'azurant optique pour une utilisation précise, il est alors possible d'obtenir des effets plus ou moins persistants dans le temps. Ainsi, et dans un mode de mise en oeuvre de la présente invention, on cherche à révéler le traitement temporaire des sciages frais transportés par voie maritime en container.

La préservation de ceux-ci à l'égard des moisissures se fait par une pulvérisation d'un fongicide sur l'intégralité de leur surface alors que les piles de bois sont installées dans le container de transport. Il est important dans ce cas de vérifier l'homogénéité de l'application. La coloration du produit de préservation est impossible pour d'évidentes raisons de nettoyage du container une fois la destination atteinte. En utilisant une composition pour le traitement du bois telle que décrite précédemment, il est alors facile de vérifier le bon traitement tant avant le départ qu'à l'ouverture du conditionnement. En utilisant pour ce marquage, un agent très photosensible telle que l'esculine par exemple, il est facile en laissant l'intérieur du container exposé à la lumière d'effacer toutes traces de traitement avant une nouvelle utilisation.

Dans un autre mode de mise en oeuvre de la présente invention, des essais ont été conduits en incorporant des quantités croissantes d'azurant optique à une composition insecticide et fongicide constituée d'une micro émulsion aqueuse destinée à la préservation préventive des bois massifs.

Cet azurant optique qui est ici le 4,4-bis-(sulfostyryl)-biphényl sel disodique, a été incorporé dans la composition selon des quantités croissantes de 0,01 à 0,1 % en masse. De par ses caractéristiques de polarité, ce produit est parfaitement soluble à froid dans l'eau.

Les échantillons de bois utilisés sont des sections de lambris en épicéa larges de 90 millimètres et longues de 200 millimètres. Lors du choix des échantillons, il faut veiller à ce que les cernes d'accroissement soient orientés perpendiculairement à la face de la pièce ou au plus inclinés de 45° par rapport à cette face. En effet, ce choix d'inclinaison des cernes permet de favoriser la pénétration et la diffusion de la composition appliquée dans le bois pour avoir un test qui soit reproductible.

Une fois la composition déposée par pulvérisation homogène à raison de 200,00 grammes par mètre carré de surface à traiter, ces échantillons de bois sont mis à sécher durant 48 heures dans une enceinte obscure, ventilée, maintenue à une température de 20° C et à humidité contrôlée.

**TABLEAU IV**

| Numéros d'échantillons | Concentration en azurant optique (%m/m) | Notation Fluorescence (échelle 0 à 4) |
|---|---|---|
| 1 à 10 | 0 | 0 |
| 11 à 20 | 0,001% | 1 |
| 21 à 30 | 0,005% | 2 |
| 31 à 40 | 0,01% | 3-4 |
| 41 à 50 | 0,05% | 4 |
| 51 à 60 | 0,1% | 4 |

Au terme de la période de séchage, les échantillons ont été exposés au rayonnement d'une lampe UV dont la longueur d'onde (λ) est de 365 nanomètres. Leur luminescence a été observée et notée selon une échelle variant de 0 à 4 (Tableau IV).

La notation 0 correspond à une absence de fluorescence et la note 4 au seuil maximal à partir duquel une augmentation de la quantité d'azurant optique ne génère plus d'augmentation de la fluorescence dans les conditions de l'essai.

Cette première expérimentation a démontré les avantages de la présente invention et fixer à 0,05% (m/m) la dilution de 4,4-bis-(sulfostyryl)-biphényl sel disodique dans la composition en essai comme optimale.

Afin de vérifier si l'estimation de la dose appliquée était possible grâce à l'invention, une seconde série d'essai à été conduite selon les modalités précédemment décrites.

La dilution de l'azurant optique - 4,4-bis-(sulfostyryl)-biphényl sel disodique - dans la composition de traitement a été fixée à 0,05% (m/m). Les variations ont consisté en l'application de quantités croissantes de la composition sur les échantillons de bois. Ces variations de quantité et les résultats associés sont résumés ci-dessous (Tableau V).

**TABLEAU V**

| Numéros échantillons | Rétention théorique en grammes/m²_{.} | Quantité moyenne appliquée en grammes/m². | Résultats de fluorescence sur une échelle de 0 à 4 |
|---|---|---|---|
| 1 à 4 | 0 | 0 | **0** |
| 5 à 8 | 18,75 | 17,56 | **1** |
| 9 à 12 | 37,50 | 38,75 | **1** |
| 13 à 16 | 75,00 | 76,83 | **1** |
| 17 à 20 | 150,00 | 154,17 | **2** |
| 21 à 24 | 300,00 | 296,12 | **4** |

Ces résultats démontrent clairement la possibilité d'une estimation du dépôt ou non de la dose optimale de la composition pour le traitement du bois.

Par ailleurs, les échantillons 21 à 24 restés exposés à l'extérieur pendant 240 heures en plein mois de Juillet sur un châssis incliné à 45° et orienté au sud ouest ne réémettent pas de fluorescence au terme de cette exposition. L'agent azurant qui est photosensible, s'est intégralement dégradé à la lumière.

## Revendications

1. Composition pour le traitement du bois ou de matériaux dérivés du bois, ladite composition comportant au moins un insecticide et/ou au moins un fongicide, **caractérisée en ce qu'**elle comprend également un agent ignifugeant, ledit agent ignifugeant étant l'éthylènediamine phosphate (EDAP), et ladite composition comprenant de 5 à 60 % en poids d'agent ignifugeant, par rapport au poids total de la composition.

2. Composition selon la revendication 1, **caractérisée en ce que** ladite composition est une émulsion aqueuse, une microémulsion, une dispersion aqueuse ou encore une solution aqueuse.

3. Composition selon la revendication 1 ou 2, **caractérisée en ce que** ladite composition comprend de plus au moins un des éléments suivants : un agent fluorescent, un agent susceptible de filtrer les UV, un hydrofuge, un colorant, un agent de conservation et des combinaisons de ceux-ci.

4. Composition selon la revendication 3, **caractérisée en ce que** ledit agent fluorescent est un azurant optique.

5. Composition selon la revendication 4, **caractérisée en ce que** ledit azurant optique est choisi parmi les dérivés du stilbène, les dérivés coumariniques, les dérivés oxazole et benzoxazole, les dérivés de naphthalimide, les dérivés de pyrène et les dérivés de pyrazoline.

6. Procédé de traitement d'au moins une pièce en bois ou constituée de matériaux dérivés du bois matériaux dérivés du bois, dans lequel on expose ladite au moins une pièce à la composition selon l'une quelconque des revendications 1 à 5, pour déposer simultanément au moins un agent ignifugeant, un insecticide et/ou un fongicide sur ladite pièce.

7. Utilisation d'une composition selon l'une quelconque des revendications 1 à 5 pour le traitement d'au moins la charpente d'un bâtiment.

## Patentansprüche

1. Zuaammensetzung zur Behandlung von Holz oder Holzwerkstoffen, wobei die Zusammensetzung mindestens ein Insektizid und/oder mindestens ein Fungizid umfasst, **dadurch gekennzeichnet, dass** sie außerdem ein Flammschutzmittel umfasst, wobei es sich bei dem Flammschutzmittel um Ethylendiaminphosphat (EDAP) handelt, und wobei die Zusammensetzung 5 bis 60 Ges.-% Flammschutzmittel, bezogen auf das Gesamtgewicht der Zusammensetzung, umfasst.

2. Zusammensetzung nach Anspruch 1, **dadurch gekennzeichnet, dass** es sich bei der Zusammensetzung um eine wässrige Emulsion, eine Mikroemulsion, eine wässrige Dispersion oder auch eine wässrige Lösung handelt.

3. Zusammensetzung nach Anspruch 1 oder 2, **dadurch gekennzeichnet, dass** die Zusammensetzung außerdem mindestens eines der folgenden Elemente umfasst: ein Fluoreszenzmittel, ein Mittel, das zum Herausfiltern von UV-Strahlen befähigt ist, ein wasserabweisendes Mittel, ein Farbmittel, ein Konservierungsmittel und Kombinationen davon.

4. Zusammensetzung nach Anspruch 3, **dadurch gekennzeichnet, dass** es sich bei dem Fluoreszenzmittel um einen optischen Aufheller handelt.

5. Zusammensetzung nach Anspruch 4, **dadurch gekennzeichnet, dass** der optische Aufheller aus Stilbenderivaten, Cumarinderivaten, Oxazol- und Benzoxazolderivaten, Naphthalimidderivaten, Pyrenderivaten und Pyrazolinderivaten ausgewählt ist.

6. Verfahren zur Behandlung mindestens eines Teils aus Holz oder Holzwerkstoffen, bei dem man auf das mindestens eine Teil eine Zusammensetzung nach einem der Anspruche 1 bis 5 einwirken lässt, um gleichzeitig mindestens ein Flammschutzmittel, ein Insektizid und/oder ein Fungizid auf dem Teil abzuscheiden.

7. Verwerdung einer Zusammensetzung nach einem der Ansprüche 1 bis 5 zur Behandlung von mindestens dem Gebälk eines Bauwerks.

## Claims

1. Composition for treating wood or materials derived from wood, said composition comprising at least one insecticide and/or at least one fungicide **characterized in that** it also comprises a fire retardant, said fire retardant being ethylenediamine phosphate (EDAP), and said composition comprising from 5% to 60% by weight of fire retardant, with respect to the total weight of the composition.

2. Composition according to Claim 1, **characterized in that** said composition is an aqueous emulsion, a micro emulsion, an aqueous dispersion or an aqueous solution.

3. Composition according to Claim 1 or 2, **characterized in that** said composition furthermore comprises at leat one of the following components: a fluorescent agent, a UV filter, a water repellent, a colorant, a preservative and combinations thereof.

4. Composition according to Claim 3, **characterized in that** said fluorescent agent is an optical brightener.

5. Composition according to Claim 4, **characterized in that** said optical brightener is selected from stilbene derivatives, coumarin derivatives, oxazole and benzoxazole derivatives, naphthalimide derivatives, pyrene derivatives and pyrazoline derivatives.

6. Method for treating at least one part made of wood or consisting of materials derived from wood, in which said at least one part is exposed to the composition according to any one of Claims 1 to 5, in oder to simultaneously deposit at least a flame retardant, an insecticide and/or a fungicide on said part.

7. Use of a composition according to any one of Claims 1 to 5, for treating at least the framework of a building.
